# EUROPEAN PATENT APPLICATION

(11) **EP 4 718 568 A1**
(43) Date of publication of application: **01.04.2026**
(21) Application number: 24831967.5
(22) Date of filing: 26.06.2024
(51) Int. Cl.: H01M 10/0569, H01M 10/0567, H01M 10/0568

(54) **NONAQUEOUS SOLVENT SOLUTION, RETENTION METHOD, AND STORAGE CONTAINER**

(30) Priority: 28.06.2023 JP 2023106167
(71) Applicant: Central Glass Company, Limited, Ube-shi, Yamaguchi 755-0001 (JP)
(72) Inventor: KUBO, Kenji, Tokyo 101-0054 (JP); TAKAHASHI, Mikihiro, Tokyo 101-0054 (JP); MORINAKA, Takayoshi, Tokyo 101-0054 (JP)
(74) Representative: Manitz Finsterwald Patent- und Rechtsanwaltspartnerschaft mbB
(86) International application number: PCT/JP2024/023102
(87) International publication number: WO 2025/005107

(57) **Abstract**

The present disclosure provides a nonaqueous solvent solution containing a nonaqueous solvent, a difluorobis(oxalato)phosphate, a tetrafluoro oxalato phosphate, and a tris(oxalato)phosphate in which a concentration of the difluorobis(oxalato)phosphate in the nonaqueous solvent solution is 10 to 50 mass% and in which a ratio of the difluorobis(oxalato)phosphate to the tris(oxalato)phosphate is such that, per 1 mol of the difluorobis(oxalato)phosphate, 0.001 mol or more of the tris(oxalato)phosphate is present, a holding method, and a storage container.

## Description

### TECHNICAL FIELD

The present disclosure relates to a nonaqueous solvent solution, a holding method, and a storage container.

### BACKGROUND ART

Patent Literature 1 discloses that when an electrolyte solution for a nonaqueous electrolyte solution battery containing a nonaqueous organic solvent and a solute further contains both a difluoro(bisoxalato)phosphate and a tetrafluoro(oxalato)phosphate as additives, an electrolyte solution for a nonaqueous electrolyte solution battery and a nonaqueous electrolyte solution battery having excellent low-temperature characteristics in which durability such as cycle characteristics and high-temperature preservability is improved and which can exhibit sufficient performance even at a low temperature of 0°C or lower can be provided.

Moreover, Example 8 of Patent Literature 2 discloses that an ethyl methyl carbonate solution containing 37 mass% of lithium difluorobis(oxalato)phosphate and 2 mass% of lithium tetrafluoro(oxalato)phosphate can be obtained, which can be used as an effective additive for improving the performance of a nonaqueous electrolyte solution battery.

As described above, in the preparation of a nonaqueous electrolyte solution containing a difluorobis(oxalato)phosphate and a tetrafluoro oxalato phosphate, addition of the difluorobis(oxalato)phosphate and the tetrafluoro oxalato phosphate may be performed in a form of adding a nonaqueous solvent solution of the difluorobis(oxalato)phosphate and the tetrafluoro oxalato phosphate having predetermined concentrations (hereinafter, sometimes referred to as "a concentrated liquid of a difluorobis(oxalato)phosphate containing a tetrafluoro oxalato phosphate" or simply "a concentrated liquid").

### CITATION LIST

### PATENT LITERATURE

Patent Literature 1: JP2011-222193A
Patent Literature 2: JP2010-143835A

### SUMMARY OF INVENTION

### TECHNICAL PROBLEM

A concentrated liquid of a difluorobis(oxalato)phosphate containing a tetrafluoro oxalato phosphate tends to cause corrosion of stainless steel when brought into contact with stainless steel in the case where water is mixed.

Therefore, an object of the present disclosure is to provide a concentrated liquid of a difluorobis(oxalato)phosphate containing a tetrafluoro oxalato phosphate which hardly causes corrosion even when brought into contact with stainless steel even in the case where water is mixed, a holding method thereof, and a storage container thereof.

### SOLUTION TO PROBLEM

A concentrated liquid of a difluorobis(oxalato)phosphate containing a tetrafluoro oxalato phosphate tends to cause corrosion of stainless steel when brought into contact with stainless steel in the case where water is mixed.

The present disclosers have found that when water is mixed in the concentrated liquid, hydrogen fluoride is generated in association with the decomposition reaction of the difluorobis(oxalato)phosphate and the tetrafluoro oxalato phosphate, and therefore, when the concentrated liquid is brought into contact with stainless steel, corrosion of the stainless steel is easily caused by the generated hydrogen fluoride.

As a result of intensive studies to solve such a problem, the present disclosers have found that, by adding a specific amount or more of a tris(oxalato)phosphate, the decomposition reaction can be suppressed even when water is mixed, and a concentrated liquid of a difluorobis(oxalato)phosphate containing a tetrafluoro oxalato phosphate which hardly causes corrosion even when brought into contact with stainless steel can be provided.

Specifically, the above problems can be solved by the following configuration.
[1] A nonaqueous solvent solution containing
   a nonaqueous solvent,
   a difluorobis(oxalato)phosphate,
   a tetrafluoro oxalato phosphate, and
   a tris(oxalato)phosphate
   in which a concentration of the difluorobis(oxalato)phosphate in the nonaqueous solvent solution is 10 to 50 mass%, and
   a ratio of the difluorobis(oxalato)phosphate to the tris(oxalato)phosphate is such that, per 1 mol of the difluorobis(oxalato)phosphate, 0.001 mol or more of the tris(oxalato)phosphate is present.
[2] The nonaqueous solvent solution according to [1], in which the ratio of the difluorobis(oxalato)phosphate to the tris(oxalato)phosphate is such that, per 1 mol of the difluorobis(oxalato)phosphate, 0.03 mol or less of the tris(oxalato)phosphate is present.
[3] The nonaqueous solvent solution according to [1] or [2], in which a ratio of the difluorobis(oxalato)phosphate to the tetrafluoro oxalato phosphate is such that, per 1 mol of the difluorobis(oxalato)phosphate, 0.010 to 0.25 mol of the tetrafluoro oxalato phosphate is present.
[4] The nonaqueous solvent solution according to any one of [1] to [3], further containing a difluorophosphate.
[5] The nonaqueous solvent solution according to [4], in which a ratio of the difluorobis(oxalato)phosphate to the difluorophosphate is such that, per 1 mol of the difluorobis(oxalato)phosphate, 0.001 to 0.05 mol of the difluorophosphate is present.
[6] The nonaqueous solvent solution according to any one of [1] to [5], in which the nonaqueous solvent contains at least one of a cyclic ester or a chain ester.
[7] The nonaqueous solvent solution according to [6],
   in which the nonaqueous solvent contains the chain ester, and
   a content of the chain ester is 50 to 100 vol% with respect to a total amount of the nonaqueous solvent.
[8] The nonaqueous solvent solution according to [6],
   in which the cyclic ester is at least one selected from the group consisting of ethylene carbonate, propylene carbonate, butylene carbonate, fluoroethylene carbonate, and γ-butyrolactone, and
   the chain ester is at least one selected from the group consisting of dimethyl carbonate, diethyl carbonate, ethyl methyl carbonate, methyl acetate, ethyl acetate, methyl propionate, and ethyl propionate.
[9] The nonaqueous solvent solution according to any one of [1] to [8], which is in contact with stainless steel.
[10] The nonaqueous solvent solution according to [9], in which the stainless steel is austenitic stainless steel.
[11] A holding method for holding a nonaqueous solvent solution in a state where a liquid contact member in which at least a partial region is made of stainless steel and the nonaqueous solvent solution are in contact with each other
   in which the nonaqueous solvent solution is a nonaqueous solvent solution containing
   a nonaqueous solvent,
   a difluorobis(oxalato)phosphate,
   a tetrafluoro oxalato phosphate, and
   a tris(oxalato)phosphate,
   a concentration of the difluorobis(oxalato)phosphate in the nonaqueous solvent solution is 10 to 50 mass%, and
   a ratio of the difluorobis(oxalato)phosphate to the tris(oxalato)phosphate is such that, per 1 mol of the difluorobis(oxalato)phosphate, 0.001 mol or more of the tris(oxalato)phosphate is present.
[12] The holding method according to [11], in which the ratio of the difluorobis(oxalato)phosphate to the tris(oxalato)phosphate is such that, per 1 mol of the difluorobis(oxalato)phosphate, 0.03 mol or less of the tris(oxalato)phosphate is present.
[13] The holding method according to [11] or [12], in which the ratio of the difluorobis(oxalato)phosphate to the tetrafluoro oxalato phosphate is such that, per 1 mol of the difluorobis(oxalato)phosphate, 0.010 to 0.25 mol of the tetrafluoro oxalato phosphate is present.
[14] The holding method according to any one of [11] to [13], further containing a difluorophosphate.
[15] The holding method according to [14], in which a ratio of the difluorobis(oxalato)phosphate to the difluorophosphate is such that, per 1 mol of the difluorobis(oxalato)phosphate, 0.001 to 0.05 mol of the difluorophosphate is present.
[16] The holding method according to any one of [11] to [15], in which the nonaqueous solvent contains at least one of a cyclic ester and a chain ester.
[17] The holding method according to [16],
   in which the nonaqueous solvent contains the chain ester, and
   a content of the chain ester is 50 to 100 vol% with respect to a total amount of the nonaqueous solvent.
[18] The holding method according to [16],
   in which the cyclic ester is at least one selected from the group consisting of ethylene carbonate, propylene carbonate, butylene carbonate, fluoroethylene carbonate, and γ-butyrolactone, and
   the chain ester is at least one selected from the group consisting of dimethyl carbonate, diethyl carbonate, ethyl methyl carbonate, methyl acetate, ethyl acetate, methyl propionate, and ethyl propionate.
[19] The holding method according to any one of [11] to [18], in which the stainless steel is austenitic stainless steel.
[20] The holding method according to any one of [11] to [20], in which the liquid contact member is a liquid contact member in a storage container which stores the nonaqueous solvent solution, and the nonaqueous solvent solution is held in the storage container.
[21] A storage container having a liquid contact member in which at least a partial region is made of stainless steel
   in which a nonaqueous solvent solution is stored in the storage container in a state of being in contact with the liquid contact member,
   the nonaqueous solvent solution is a nonaqueous solvent solution containing
   a nonaqueous solvent,
   a difluorobis(oxalato)phosphate,
   a tetrafluoro oxalato phosphate, and
   a tris(oxalato)phosphate,
   a concentration of the difluorobis(oxalato)phosphate in the nonaqueous solvent solution is 10 to 50 mass%, and
   a ratio of the difluorobis(oxalato)phosphate to the tris(oxalato)phosphate is such that, per 1 mol of the difluorobis(oxalato)phosphate, 0.001 mol or more of the tris(oxalato)phosphate is present.
[22] The storage container according to [21], in which the stainless steel is austenitic stainless steel.

### ADVANTAGEOUS EFFECTS OF INVENTION

According to the present disclosure, a concentrated liquid of a difluorobis(oxalato)phosphate containing a tetrafluoro oxalato phosphate which hardly causes corrosion even when brought into contact with stainless steel even in the case where water is mixed, a holding method thereof, and a storage container thereof can be provided.

### DESCRIPTION OF EMBODIMENTS

The term "to" in the present specification is used with the meanings including the numerical values indicated before and after "to" as a lower limit value and an upper limit value.

Hereinafter, the present disclosure will be described in detail, but the description of the constituent elements described below is an example of an embodiment of the present disclosure, and the present disclosure is not limited to these specific contents.

### [Nonaqueous Solvent Solution]

The nonaqueous solvent solution of the present disclosure is a nonaqueous solvent solution containing
a nonaqueous solvent,
a difluorobis(oxalato)phosphate,
a tetrafluoro oxalato phosphate, and
a tris(oxalato)phosphate
in which a concentration of the difluorobis(oxalato)phosphate in the nonaqueous solvent solution is 10 to 50 mass% and
a ratio of the difluorobis(oxalato)phosphate to the tris(oxalato)phosphate is such that, per 1 mol of the difluorobis(oxalato)phosphate, 0.001 mol or more of the tris(oxalato)phosphate is present.

The nonaqueous solvent solution of the present disclosure has a difluorobis(oxalato)phosphate concentration of 10 to 50 mass% and is a concentrated liquid. The concentration of the difluorobis(oxalato)phosphate in the nonaqueous solvent solution of the present disclosure may be 15 to 40 mass%.

Examples of the difluorobis(oxalato)phosphate include lithium difluorobis(oxalato)phosphate and sodium difluorobis(oxalato)phosphate.

Examples of the tetrafluoro oxalato phosphate include lithium tetrafluoro oxalato phosphate and sodium tetrafluoro oxalato phosphate.

Examples of the tris(oxalato)phosphate include lithium tris(oxalato)phosphate and sodium tris(oxalato)phosphate.

The ratio of the difluorobis(oxalato)phosphate to the tris(oxalato)phosphate is such that, per 1 mol of the difluorobis(oxalato)phosphate, 0.001 mol or more of the tris(oxalato)phosphate is present, which may be 0.002 mol or more, 0.004 mol or more, or 0.005 mol or more. Moreover, per 1 mol of the difluorobis(oxalato)phosphate, 0.60 mol or less of the tris(oxalato)phosphate may be present, which may be 0.30 mol or less, 0.15 mol or less, 0.07 mol or less, or may be 0.03 mol or less. When 0.03 mol or less of the tris(oxalato)phosphate is present per 1 mol of the difluorobis(oxalato)phosphate, gas generation in the battery hardly occurs when a nonaqueous electrolyte solution is prepared using the nonaqueous solvent solution and the nonaqueous electrolyte solution is used in a nonaqueous electrolyte solution battery.

The ratio of the difluorobis(oxalato)phosphate to the tetrafluoro oxalato phosphate may be such that, per 1 mol of the difluorobis(oxalato)phosphate, 0.010 to 0.30 mol of the tetrafluoro oxalato phosphate may be present, which may be 0.010 to 0.25 mol.

The nonaqueous solvent solution of the present disclosure may further contain a difluorophosphate.

Examples of the difluorophosphate include lithium difluorophosphate and sodium difluorophosphate.

A ratio of the difluorobis(oxalato)phosphate to the difluorophosphate may be such that, per 1 mol of the difluorobis(oxalato)phosphate, 0.001 to 0.05 mol of the difluorophosphate may be present.

### (Nonaqueous Solvent)

The type of the nonaqueous solvent contained in the nonaqueous solvent solution of the present disclosure is not particularly limited, and any nonaqueous solvent can be used.

The nonaqueous solvent may contain, for example, at least one selected from the group consisting of a cyclic ester, a chain ester, a cyclic ether, a chain ether, a sulfone compound, a sulfoxide compound, and an ionic liquid.

Examples of the cyclic ester include cyclic carbonates such as propylene carbonate (hereinafter, sometimes referred to as "PC"), ethylene carbonate (hereinafter, sometimes referred to as "EC"), fluoroethylene carbonate (hereinafter, sometimes referred to as "FEC"), and butylene carbonate, as well as γ-butyrolactone and γ-valerolactone.

Examples of the chain ester include chain carbonates such as diethyl carbonate (hereinafter, sometimes referred to as "DEC"), dimethyl carbonate (hereinafter, sometimes referred to as "DMC"), and ethyl methyl carbonate (hereinafter, sometimes referred to as "EMC"), as well as methyl acetate, methyl propionate, and ethyl propionate (hereinafter, sometimes referred to as "EP").

Examples of the cyclic ether include tetrahydrofuran, 2-methyltetrahydrofuran, and dioxane.

Examples of the chain ether include dimethoxyethane and diethyl ether.

Examples of the sulfone compound include dimethyl sulfoxide and sulfolane.

The nonaqueous solvent may contain at least one of a cyclic ester and a chain ester.

The cyclic ester may be at least one selected from the group consisting of ethylene carbonate, propylene carbonate, butylene carbonate, fluoroethylene carbonate, and γ-butyrolactone, and
the chain ester may be at least one selected from the group consisting of dimethyl carbonate, diethyl carbonate, ethyl methyl carbonate, methyl acetate, ethyl acetate, methyl propionate, and ethyl propionate.

The chain ester content may be 50 to 100 vol% with respect to a total amount of the nonaqueous solvent.

The nonaqueous solvent solution of the present disclosure may be in contact with stainless steel.

The stainless steel is not particularly limited but may be austenitic stainless steel.

### [Holding Method]

The holding method of the present disclosure is a holding method for holding a nonaqueous solvent solution in a state where a liquid contact member in which at least a partial region is made of stainless steel and the nonaqueous solvent solution are in contact with each other
in which the nonaqueous solvent solution is a nonaqueous solvent solution containing
a nonaqueous solvent,
a difluorobis(oxalato)phosphate,
a tetrafluoro oxalato phosphate, and
a tris(oxalato)phosphate,
a concentration of the difluorobis(oxalato)phosphate in the nonaqueous solvent solution is 10 to 50 mass% and
a ratio of the difluorobis(oxalato)phosphate to the tris(oxalato)phosphate is such that, per 1 mol of the difluorobis(oxalato)phosphate, 0.001 mol or more of the tris(oxalato)phosphate is present.

The liquid contact member is not particularly limited as long as at least a partial region is made of stainless steel. The stainless steel may be austenitic stainless steel.

The liquid contact member may be a liquid contact member in which the entire region is made of stainless steel.

The liquid contact member holds the nonaqueous solvent solution in a state of being in contact with the nonaqueous solvent solution, but a method for bringing the liquid contact member and the nonaqueous solvent solution into contact with each other is not particularly limited.

For example, the liquid contact member may be immersed in the nonaqueous solvent solution. In addition, the nonaqueous solvent solution may be stored in a storage container configured with the liquid contact member.

The nonaqueous solvent solution in the holding method of the present disclosure has a difluorobis(oxalato)phosphate concentration of 10 to 50 mass% and is a concentrated liquid. The concentration of the difluorobis(oxalato)phosphate in the nonaqueous solvent solution of the present disclosure may be 15 to 40 mass%.

Examples of the difluorobis(oxalato)phosphate include lithium difluorobis(oxalato)phosphate and sodium difluorobis(oxalato)phosphate.

Examples of the tetrafluoro oxalato phosphate include lithium tetrafluoro oxalato phosphate and sodium tetrafluoro oxalato phosphate.

Examples of the tris(oxalato)phosphate include lithium tris(oxalato)phosphate and sodium tris(oxalato)phosphate.

The ratio of the difluorobis(oxalato)phosphate to the tris(oxalato)phosphate is such that, per 1 mol of the difluorobis(oxalato)phosphate, 0.001 mol or more of the tris(oxalato)phosphate is present, which may be 0.002 mol or more, 0.004 mol or more, or 0.005 mol or more. Moreover, per 1 mol of the difluorobis(oxalato)phosphate, 0.60 mol or less of the tris(oxalato)phosphate may be present, which may be 0.30 mol or less, 0.15 mol or less, 0.07 mol or less, or may be 0.03 mol or less.

The ratio of the difluorobis(oxalato)phosphate to the tetrafluoro oxalato phosphate may be such that, per 1 mol of the difluorobis(oxalato)phosphate, 0.010 to 0.30 mol of the tetrafluoro oxalato phosphate may be present, which may be 0.010 to 0.25 mol.

The nonaqueous solvent solution in the holding method of the present disclosure may further contain a difluorophosphate.

Examples of the difluorophosphate include lithium difluorophosphate and sodium difluorophosphate.

A ratio of the difluorobis(oxalato)phosphate to the difluorophosphate may be such that, per 1 mol of the difluorobis(oxalato)phosphate, 0.001 to 0.05 mol of the difluorophosphate may be present.

### (Nonaqueous Solvent)

The type of the nonaqueous solvent contained in the nonaqueous solvent solution in the holding method of the present disclosure is not particularly limited, and any nonaqueous solvent can be used.

The nonaqueous solvent may be the same as the nonaqueous solvent contained in the nonaqueous solvent solution of the present disclosure, and the same applies to preferable ranges and preferable contents.

Moreover, the liquid contact member may be a liquid contact member in a storage container which stores the nonaqueous solvent solution, and the nonaqueous solvent solution may be held in the storage container.

### [Storage Container]

The storage container of the present disclosure is a storage container having a liquid contact member in which at least a partial region is made of stainless steel
in which a nonaqueous solvent solution is stored in the storage container in a state of being in contact with the liquid contact member,
the nonaqueous solvent solution is a nonaqueous solvent solution containing
a nonaqueous solvent,
a difluorobis(oxalato)phosphate,
a tetrafluoro oxalato phosphate, and
a tris(oxalato)phosphate,
a concentration of the difluorobis(oxalato)phosphate in the nonaqueous solvent solution is 10 to 50 mass% and
a ratio of the difluorobis(oxalato)phosphate to the tris(oxalato)phosphate is such that, per 1 mol of the difluorobis(oxalato)phosphate, 0.001 mol or more of the tris(oxalato)phosphate is present.

### The storage container is not particularly limited as long as the storage container has a liquid contact member in which at least a partial region is made of stainless steel.

The liquid contact member is not particularly limited as long as at least a partial region is made of stainless steel.

The liquid contact member may be a liquid contact member in which the entire region is made of stainless steel.

Since stainless steel has high corrosion resistance, for example, even when a nonaqueous solvent solution comes into contact with air and corrosiveness of the nonaqueous solvent solution increases, corrosion of the container which causes trouble in use hardly occurs.

The stainless steel may be austenitic stainless steel.

Examples of the austenitic stainless steel include SUS304, SUS316, and SUS316L. Here, SUS304, SUS316, and SUS316L are specified in Japanese Industrial Standard JIS G 4305.

In the storage container of the present disclosure, an outer peripheral portion made of another material may be formed on a portion other than the liquid contact member, for example, outside the liquid contact member (on the side opposite to the surface in contact with the nonaqueous solvent solution).

The material forming the outer peripheral portion is not particularly limited, but examples thereof include polyolefin resins such as polyethylene and polypropylene, polyester resins such as polyethylene terephthalate, and polyamide resins such as nylon.

Moreover, the storage container of the present disclosure may have a lid but does not have to have a lid, but the storage container preferably has a lid from the viewpoint of improving sealability and preventing deterioration of the nonaqueous solvent solution due to contact between the nonaqueous solvent solution and oxygen or the like in the air during storage in the container.

The material of the lid is not particularly limited, but the lid is preferably made of austenitic stainless steel.

The nonaqueous solvent solution in the storage container of the present disclosure has a difluorobis(oxalato)phosphate concentration of 10 to 50 mass% and is a concentrated liquid. The concentration of the difluorobis(oxalato)phosphate in the nonaqueous solvent solution of the present disclosure may be 15 to 40 mass%.

Examples of the difluorobis(oxalato)phosphate include lithium difluorobis(oxalato)phosphate and sodium difluorobis(oxalato)phosphate.

Examples of the tetrafluoro oxalato phosphate include lithium tetrafluoro oxalato phosphate and sodium tetrafluoro oxalato phosphate.

Examples of the tris(oxalato)phosphate include lithium tris(oxalato)phosphate and sodium tris(oxalato)phosphate.

The ratio of the difluorobis(oxalato)phosphate to the tris(oxalato)phosphate is such that, per 1 mol of the difluorobis(oxalato)phosphate, 0.001 mol or more of the tris(oxalato)phosphate is present, which may be 0.002 mol or more, 0.004 mol or more, or 0.005 mol or more. Moreover, per 1 mol of the difluorobis(oxalato)phosphate, 0.60 mol or less of the tris(oxalato)phosphate may be present, which may be 0.30 mol or less, 0.15 mol or less, 0.07 mol or less, or may be 0.03 mol or less.

The ratio of the difluorobis(oxalato)phosphate to the tetrafluoro oxalato phosphate may be such that, per 1 mol of the difluorobis(oxalato)phosphate, 0.010 to 0.30 mol of the tetrafluoro oxalato phosphate may be present, which may be 0.010 to 0.25 mol.

The nonaqueous solvent solution in the storage container of the present disclosure may further contain a difluorophosphate.

Examples of the difluorophosphate include lithium difluorophosphate and sodium difluorophosphate.

A ratio of the difluorobis(oxalato)phosphate to the difluorophosphate may be such that, per 1 mol of the difluorobis(oxalato)phosphate, 0.001 to 0.05 mol of the difluorophosphate may be present.

### (Nonaqueous Solvent)

The type of the nonaqueous solvent contained in the nonaqueous solvent solution in the storage container of the present disclosure is not particularly limited, and any nonaqueous solvent can be used.

The nonaqueous solvent may be the same as the nonaqueous solvent contained in the nonaqueous solvent solution of the present disclosure, and the same applies to preferable ranges and preferable contents.

### EXAMPLE

Hereinafter, the present disclosure will be specifically explained with Examples, but the present disclosure is not limited by these Examples.

### [Evaluation]

SUS304 test pieces were immersed and held (stored) in the concentrated liquids in the following Examples and Comparative Examples, and changes in the iron atom contents (Fe contents) of the concentrated liquids before and after storage were measured.

The Fe contents of the concentrated liquids before and after the holding were measured using an ICP Optical Emission Spectrometer (Agilent 5110 ICP-OES).

### [Preparation of Test Piece]

Test pieces (each having a size of 20 mm × 15 mm × 3 mm) made of SUS304, which is austenitic stainless steel, were immersed in 30% nitric acid at 50°C for an hour, washed with pure water, and dried, and thus test pieces (SUS304 test pieces) were obtained.

### [Examples 1 to 7 and Comparative Examples 1 to 3]

### <Preparation of Concentrated Lithium Difluorobis(Oxalato)Phosphate Liquid>

Ethyl methyl carbonate (EMC) having a water content of 10 ppm by mass or less, lithium difluorobis(oxalato)phosphate, and lithium tetrafluoro oxalato phosphate were dissolved in a fluororesin container (PFA container manufactured by FLON INDUSTRY) to obtain a solution in which the concentrations were 24.0 mass% and 2.7 mass%, respectively. The concentrated liquids of difluorobis(oxalato)phosphate containing tetrafluoro oxalato phosphate for Examples and Comparative Examples were prepared by dissolving lithium tris(oxalato)phosphate and lithium difluorophosphate in this solution at the molar ratios described in Table 1 (the mole numbers of each compound relative to 1 mol of difluorobis(oxalato)phosphate).

The SUS304 test pieces were placed in the concentrated liquids to completely immerse the test pieces, and water in an amount that resulted in a water concentration of 700 ppm by mass on calculation was added. After maintaining this state at 45°C for six months, the Fe contents in the concentrated liquids were determined.

The results, along with the Fe content before immersing the test pieces, are presented in Table 1.

In Table 1, LiDFBOP represents lithium difluorobis(oxalato)phosphate, LiP(Ox)3 represents lithium tris(oxalato)phosphate, LiTFOP represents lithium tetrafluoro oxalato phosphate, and LiPO2F2 represents lithium difluorophosphate.

**[Table 1]**

| | Concentrated Liquid No. | Nonaqueous Solvent | LiDFBOP | | LiTFOP | LiP(Ox)3 | LiPO2F2 | Fe Content in Concentrated Liquid [ppm by mass] | |
|---|---|---|---|---|---|---|---|---|---|
| | | | Concentration [mass%] | Molar Ratio | Molar Ratio | Molar Ratio | Molar Ratio | Before Immersion | After Immersion |
| Comparative Example 1 | 1 | EMC | 24.0 | 1.00 | 0.14 | 0.000 | 0.000 | <1 | 8 |
| Comparative Example 2 | 2 | | | | 0.14 | 4.0×10⁻⁴ | 0.000 | <1 | 8 |
| Example 1 | 3 | | | | 0.14 | 3.0×10⁻³ | 0.000 | <1 | 3 |
| Example 2 | 4 | | | | 0.14 | 0.010 | 0.000 | <1 | <1 |
| Example 3 | 5 | | | | 0.14 | 0.025 | 0.000 | <1 | <1 |
| Example 4 | 6 | | | | 0.14 | 0.050 | 0.000 | <1 | <1 |
| Example 5 | 7 | | | | 0.14 | 0.100 | 0.000 | <1 | <1 |
| Comparative Example 3 | 8 | | | | 0.14 | 0.000 | 0.015 | <1 | 10 |
| Example 6 | 9 | | | | 0.14 | 0.010 | 0.015 | <1 | <1 |
| Example 7 | 10 | | | | 0.14 | 0.010 | 0.015 | <1 | <1 |

In Table 1, "< 1" indicates that the Fe content in the concentrated liquid is less than 1 ppm by mass.

From the results in Table 1, it is observed that when a certain amount or more of lithium tris(oxalato)phosphate is added, corrosion of stainless steel is less likely to occur even when water is mixed in the concentrated liquid of a difluorobis(oxalato)phosphate containing a tetrafluoro oxalato phosphate.

### INDUSTRIAL APPLICABILITY

According to the present disclosure, a concentrated liquid of a difluorobis(oxalato)phosphate containing a tetrafluoro oxalato phosphate which hardly causes corrosion even when brought into contact with stainless steel even in the case where water is mixed, a holding method thereof, and a storage container thereof can be provided.

Although the present disclosure has been explained in detail and referring to specific embodiments, it will be apparent to a person skilled in the art that various changes and modifications can be made without departing from the spirit and the scope of the present disclosure.

The present application is based on a Japanese Patent Application (No. 2023-106167) filed on June 28, 2023, the contents of which are incorporated herein by reference.

## Claims

1. A nonaqueous solvent solution comprising
a nonaqueous solvent,
a difluorobis(oxalato)phosphate,
a tetrafluoro oxalato phosphate, and
a tris(oxalato)phosphate,
wherein a concentration of the difluorobis(oxalato)phosphate in the nonaqueous solvent solution is 10 to 50 mass%, and
a ratio of the difluorobis(oxalato)phosphate to the tris(oxalato)phosphate is such that, per 1 mol of the difluorobis(oxalato)phosphate, 0.001 mol or more of the tris(oxalato)phosphate is present.

2. The nonaqueous solvent solution according to claim 1, wherein the ratio of the difluorobis(oxalato)phosphate to the tris(oxalato)phosphate is such that, per 1 mol of the difluorobis(oxalato)phosphate, 0.03 mol or less of the tris(oxalato)phosphate is present.

3. The nonaqueous solvent solution according to claim 1 or 2, wherein a ratio of the difluorobis(oxalato)phosphate to the tetrafluoro oxalato phosphate is such that, per 1 mol of the difluorobis(oxalato)phosphate, 0.010 to 0.25 mol of the tetrafluoro oxalato phosphate is present.

4. The nonaqueous solvent solution according to claim 1 or 2, further comprising a difluorophosphate.

5. The nonaqueous solvent solution according to claim 4, wherein a ratio of the difluorobis(oxalato)phosphate to the difluorophosphate is such that, per 1 mol of the difluorobis(oxalato)phosphate, 0.001 to 0.05 mol of the difluorophosphate is present.

6. The nonaqueous solvent solution according to claim 1 or 2, wherein the nonaqueous solvent contains at least one of a cyclic ester or a chain ester.

7. The nonaqueous solvent solution according to claim 6,
wherein the nonaqueous solvent contains the chain ester, and
a content of the chain ester is 50 to 100 vol% with respect to a total amount of the nonaqueous solvent.

8. The nonaqueous solvent solution according to claim 6,
wherein the cyclic ester is at least one selected from the group consisting of ethylene carbonate, propylene carbonate, butylene carbonate, fluoroethylene carbonate, and γ-butyrolactone, and
the chain ester is at least one selected from the group consisting of dimethyl carbonate, diethyl carbonate, ethyl methyl carbonate, methyl acetate, ethyl acetate, methyl propionate, and ethyl propionate.

9. The nonaqueous solvent solution according to claim 1 or 2 which is in contact with stainless steel.

10. The nonaqueous solvent solution according to claim 9, wherein the stainless steel is austenitic stainless steel.

11. A holding method for holding a nonaqueous solvent solution in a state where a liquid contact member in which at least a partial region is made of stainless steel and the nonaqueous solvent solution are in contact with each other,
wherein the nonaqueous solvent solution is a nonaqueous solvent solution containing
a nonaqueous solvent,
a difluorobis(oxalato)phosphate,
a tetrafluoro oxalato phosphate, and
a tris(oxalato)phosphate,
a concentration of the difluorobis(oxalato)phosphate in the nonaqueous solvent solution is 10 to 50 mass%, and
a ratio of the difluorobis(oxalato)phosphate to the tris(oxalato)phosphate is such that, per 1 mol of the difluorobis(oxalato)phosphate, 0.001 mol or more of the tris(oxalato)phosphate is present.

12. The holding method according to claim 11, wherein the ratio of the difluorobis(oxalato)phosphate to the tris(oxalato)phosphate is such that, per 1 mol of the difluorobis(oxalato)phosphate, 0.03 mol or less of the tris(oxalato)phosphate is present.

13. The holding method according to claim 11 or 12, wherein a ratio of the difluorobis(oxalato)phosphate to the tetrafluoro oxalato phosphate is such that, per 1 mol of the difluorobis(oxalato)phosphate, 0.010 to 0.25 mol of the tetrafluoro oxalato phosphate is present.

14. The holding method according to claim 11 or 12, further comprising a difluorophosphate.

15. The holding method according to claim 14, wherein a ratio of the difluorobis(oxalato)phosphate to the difluorophosphate is such that, per 1 mol of the difluorobis(oxalato)phosphate, 0.001 to 0.05 mol of the difluorophosphate is present.

16. The holding method according to claim 11 or 12, wherein the nonaqueous solvent contains at least one of a cyclic ester or a chain ester.

17. The holding method according to claim 16,
wherein the nonaqueous solvent contains the chain ester, and
a content of the chain ester is 50 to 100 vol% with respect to a total amount of the nonaqueous solvent.

18. The holding method according to claim 16,
wherein the cyclic ester is at least one selected from the group consisting of ethylene carbonate, propylene carbonate, butylene carbonate, fluoroethylene carbonate, and γ-butyrolactone, and
the chain ester is at least one selected from the group consisting of dimethyl carbonate, diethyl carbonate, ethyl methyl carbonate, methyl acetate, ethyl acetate, methyl propionate, and ethyl propionate.

19. The holding method according to claim 11 or 12, wherein the stainless steel is austenitic stainless steel.

20. The holding method according to claim 11 or 12, wherein the liquid contact member is a liquid contact member in a storage container which stores the nonaqueous solvent solution, and the nonaqueous solvent solution is held in the storage container.

21. A storage container comprising a liquid contact member in which at least a partial region is made of stainless steel,
wherein a nonaqueous solvent solution is stored in the storage container in a state of being in contact with the liquid contact member,
the nonaqueous solvent solution is a nonaqueous solvent solution containing
a nonaqueous solvent,
a difluorobis(oxalato)phosphate,
a tetrafluoro oxalato phosphate, and
a tris(oxalato)phosphate,
a concentration of the difluorobis(oxalato)phosphate in the nonaqueous solvent solution is 10 to 50 mass%, and
a ratio of the difluorobis(oxalato)phosphate to the tris(oxalato)phosphate is such that, per 1 mol of the difluorobis(oxalato)phosphate, 0.001 mol or more of the tris(oxalato)phosphate is present.

22. The storage container according to claim 21, wherein the stainless steel is austenitic stainless steel.
